# EUROPÄISCHE PATENTSCHRIFT

(11) **EP 1 101 431 B1**
(45) Veröffentlichungstag und Bekanntmachung des Hinweises auf die Patenterteilung: **14.04.2004**
(21) Anmeldenummer: 00124096.9
(22) Anmeldetag: 07.11.2000
(51) Int. Cl.: A47J 31/40

(54) **Produktbehälter für Getränkeautomaten**
Product container for beverage automates
Conteneur de produit pour des automates de boissons

(30) Priorität: 18.11.1999 DE 19955483
(43) Veröffentlichungstag der Anmeldung: 23.05.2001
(73) Patentinhaber: Spengler GmbH & Co. KG, 76646 Bruchsal (DE)
(72) Erfinder: Zimmermann, Andreas, Dipl.-Ing., 76227 Karlsruhe (DE); Lansche, Reinhard, Dipl.-Ing., 69198 Schriesheim (DE)
(74) Vertreter: Fischer, Wolf-Dieter, Dipl.-Ing.

(56) Entgegenhaltungen:
- FR-A- 2 702 452
- US-A- 5 287 993
- US-A- 5 421 491
- US-A- 5 908 144

## Beschreibung

Die Erfindung betrifft einen Produktbehälter für Getränkeautomaten mit einem Blechbehältnis in dessen Boden Funktionselemente, nämlich eine Dosierschnecke und Einrichtungen zur Produktlockerung angeordnet sind.

In Produktbehältern werden bei Getränkeautomaten gemahlener Kaffee, Blatt-Tee und andere Ingredentien wie beispielsweise Schokolade, Zucker, Weißer und Suppen bereitgehalten und bei Anwahl eines Getränkes werden aus diesen Behältern beispielsweise der Kaffee in den Brüher oder die Ingredentien in die Mixeinrichtung eindosiert, in denen dann nach vorgegebenen Rezepturen die Getränke hergestellt werden.

Es sind Produkbehälter bekannt, die in der Basis eine Dosierschnecke aufweisen, die auf der einen Seite von einem Dosiermotor angetrieben wird und auf der gegenüberliegenden Seite mit einem Auslauf versehen ist, aus dem das Produkt dann dem Mixer oder dem Brüher zugeführt wird (DE 31 40 845 C2). Zur Vermeidung von Brückenbildungen in den Behältern sind innen Einrichtungen vorgesehen, die die eingefüllten Produkte lockern. Diese Einrichtungen werden durch die Schneckenbewegungen beim Dosieren mit angetrieben.

Die Produktbehälter sind entweder aus Edelstahl gefertigt und zusammengeschweißt oder sie bestehen aus Kunststoff-Blasteilen oder Kunststoff-Spritzgußteilen. Bei den aus Edelstahl gefertigten Behältern besteht der Nachteil eines hohen Arbeitsaufwandes und damit hohen Kosten, wobei diese Behälter in den Fügezonen der einzelnen Blechteile schwer zu reinigen sind. Die aus meistens Polyethylen geblasenen Behälter haben den Nachteil, daß sie nach kurzzeitigem Gebrauch unansehnlich werden und teilweise auch Geruch und Fette der Ingredentien aufnehmen. Bei den in Spritzguß gefertigten Behältern ist es nachteilig, daß sie durch die notwendigen Entformungsschrägen Volumen verlieren und an konstante Höhen gebunden sind. Weiterhin ergeben sich Montageschwierigkeiten bei schmalen und hohen Behältern.

Der Erfindung liegt die Aufgabe zugrunde, einen derartigen Produktbehälter so auszubilden, daß er einfach hergestellt und zu Reinigungszwecken leicht demontierbar und wieder montierbar ist.

Diese Aufgabe wird nach der Erfindung dadurch gelöst, daß ein hochstehender prismatischer Blechmantel mit mehreckigem, ovalem oder kreisförmigem Querschnitt vorgesehen ist, der einen über die ganze Höhe verlaufenden Schlitz aufweist, daß in den Schlitz eine Profilleiste formschlüssig und abdichtend eingesetzt ist und daß in die untere Öffnung des Blechmantels ein Kunststoffbodenteil mit den Funktionselementen formschlüssig und dicht eingesteckt ist.

Eine vorteilhafte Ausführungsform besteht darin, daß das Bodenteil in den Blechmantel mittels eines Schnappverschlusses eingerastet ist.

Weiterhin ist es vorteilhaft, daß die Abdichtung zwischen Bodenteil und Blechmantel durch eine im 2Komponenten-Verfahren am Bodenteil angegossene Dichtlippe erreichbar ist.

Es wird wird weiterhin vorgeschlagen, daß die Profilleiste über dem Produktauslauf angeordnet und transparent ist.

Es ist vorteilhaft, daß der Blechmantel aus Edelstahl besteht.

Gemäß einem weiteren Vorschlag geht man so vor, daß zum formschlüssigen Verbinden des Blechmantels und des Bodenteils an dem Bodenteil Rastelemente angeordnet sind, die in den Blechmantel eingreifen.

Es wird weiterhin vorgeschlagen, daß an dem Bodenteil separate Rastelemente angeordnet sind, die in den Blechmantel einschnappen.

Es wird weiterhin vorgeschlagen, daß die Rastelemente in dem Bodenteil eingeklippt sind.

Die Erfindung bringt insbesondere den Vorteil, daß durch die verwendeten Schnapp- und Steckverbindungen der Behälter ohne Werkzeuge im Reinigungsfall demontier- und auch wieder montierbar ist. Unabhängig von der Behälterhöhe ist die Basis immer gleich ausgebildet und über die transparente Profilleiste ist der Füllzustand des Behälters erkennbar. Der Mantel kann ohne Schweißung ausgeführt werden. Das Behältervolumen ist kostengünstig variierbar durch die Veränderung der werkzeugunabhängigen Höhe vom Blechmantel und der Profilleiste.

Die Erfindung wird in der nachfolgenden Beschreibung anhand eines in den Zeichnungen dargestellten Ausführungsbeispiels näher erläutert.

Es zeigen,

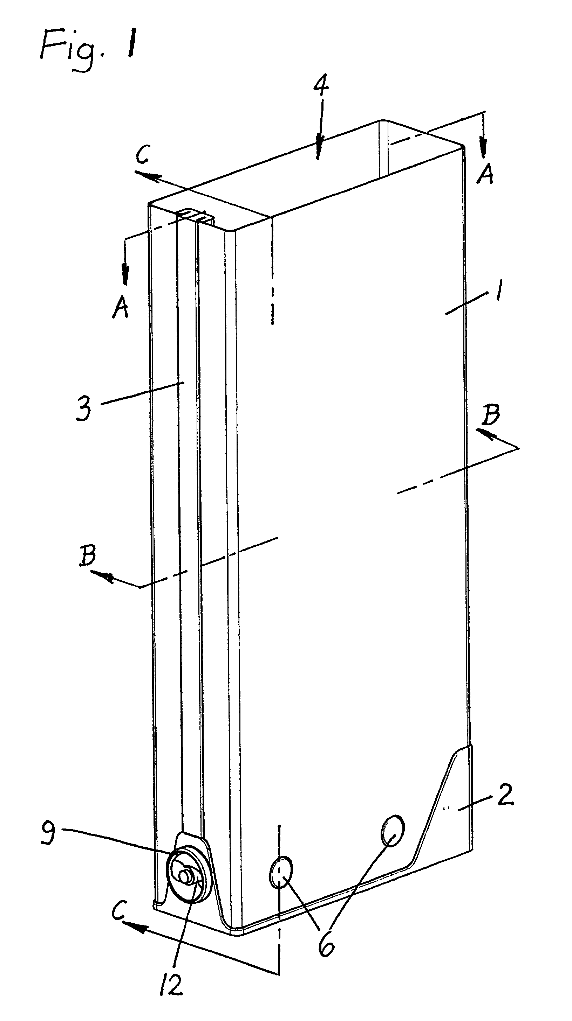

- Fig. 1: eine schaubildliche Ansicht eines Produktbehälters nach der Erfindung,

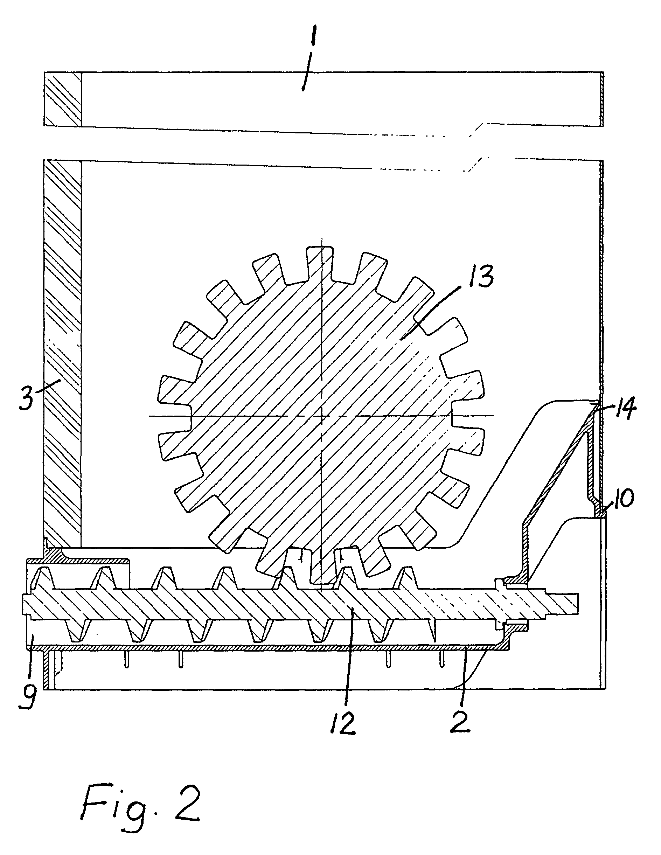

- Fig. 2: einen Schnitt nach der Linie A - A in Figur 1,

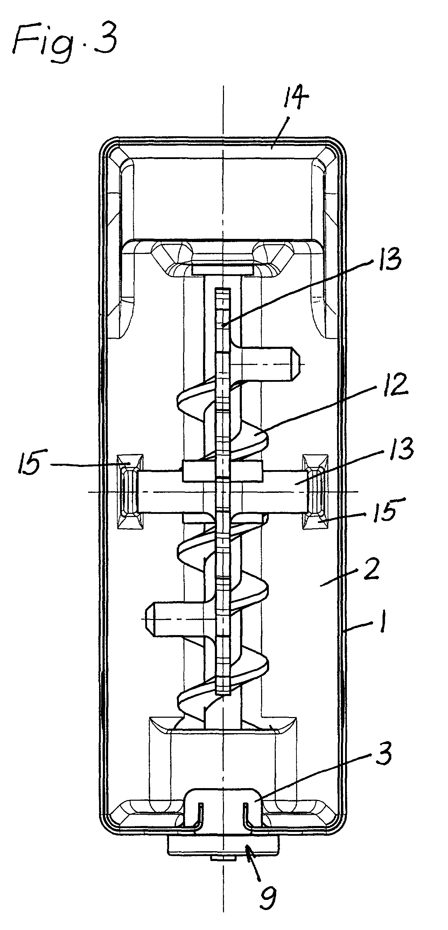

- Fig. 3: einen Schnitt nach der Linie B - B in Figur 1,
- Fig. 4: einen Schnitt nach der Linie C - C in Figur 1,

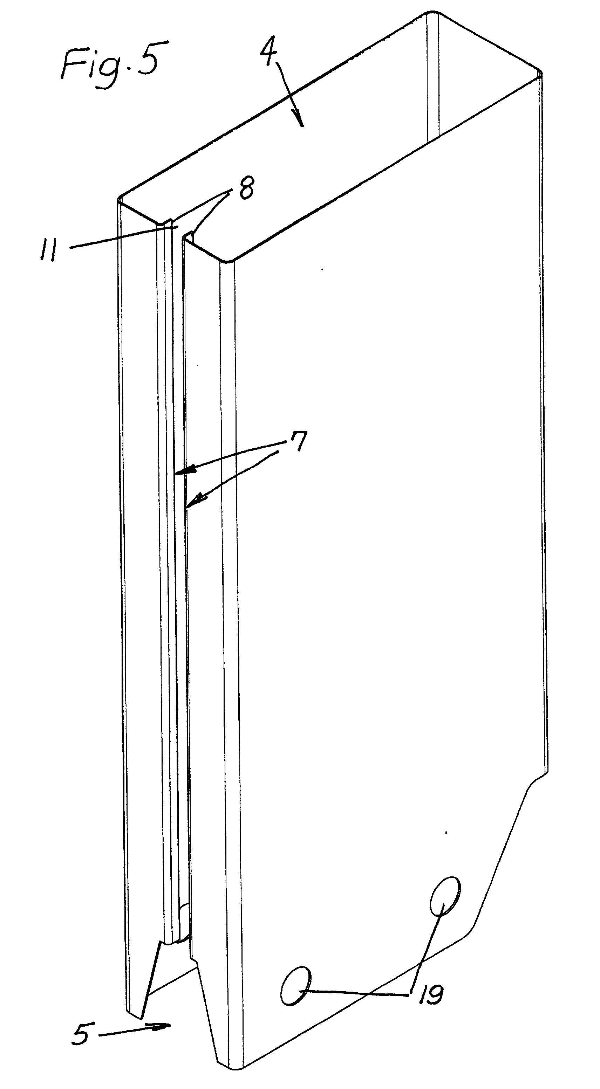

- Fig. 5: eine schaubildliche Ansicht des Blechmantels,
- Fig. 6: eine schaubildliche Ansicht des Kunststoff-Bodenteils und

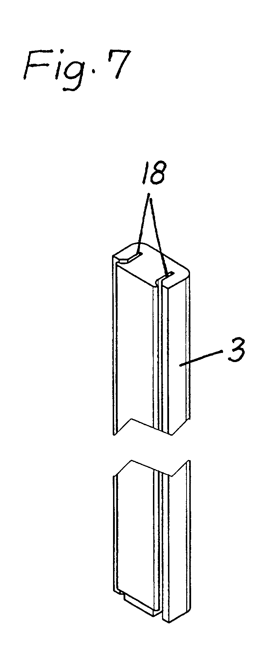

- Fig. 7: eine schaubildliche Ansicht der Kunststoff-Profilleiste.

Bei dem in den beiliegenden Zeichnungen dargestellten Ausführungsbeispiel des Produktbehälters handelt es sich um einen Behälter mit rechteckigem Querschnitt, wobei jeder beliebige Querschnitt, wie beispielsweise mehreckig, oval oder kreisförmig vorgesehen sein kann. Der Behälter besteht aus einem Blechmantel 1, der sich in seiner Höhe erstreckt und über die gesamte Höhe den gleichen Querschnitt aufweist, wobei der Blechmantel 1 über seine gesamte Höhe einen Schlitz 11 besitzt. Weiterhin ergibt sich durch diesen Blechmantel 1 eine obere Öffnung 4 und eine untere Öffnung 5. In die untere Öffnung 5 ist ein Kunststoffbodenteil 2 abgedichtet eingesetzt und der Schlitz 11 im Blechmantel 1 ist mit Hilfe einer Profilleiste 3 formschlüssig und dicht verschlossen.

Der Blechmantel 1 ist im Bereich des Schlitzes 11 entlang seiner Längskanten 7 mit hakenförmig geformten Kanten 8 versehen. Im Bereich seiner unteren Öffnung 5 ist die Kontur des Blechmantels 1 an die Form des Kunststoffbodenteils 2 angepaßt. Außerdem besitzt der Blechmantel 1 im Bereich des Bodenteils 2 seitliche Öffnungen 19 zur Aufnahme von Rastelementen 6 eines Schnappverschlusses zum lösbaren Verbinden des Bodenteils 2 mit dem Blechmantel 1.

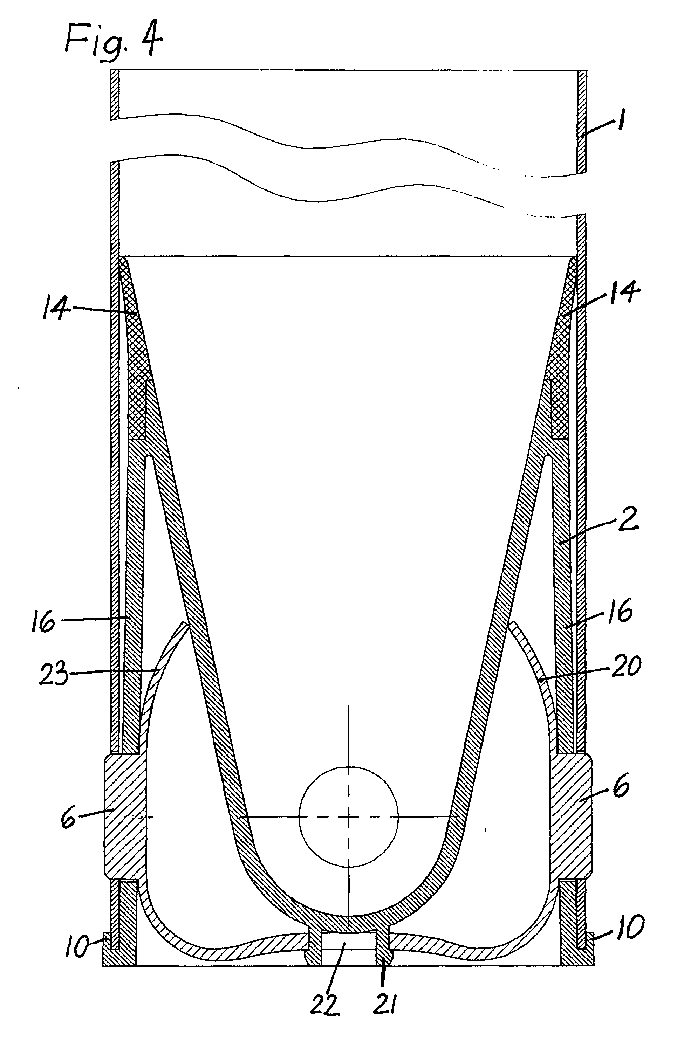

In Figur 4 ist die Verwendung eines besonderen selbständigen Rastelementes dargestellt, das an der Unterseite des Bodenteiles 2 an Rastnasen 21 in Öffnungen 22 eingeclipst wird. Dieses Rastelement 20 besitzt die seitlichen Rastelemente 6, die im Hinblick auf die am Rastelement 20 angeordneten Zungen 23 federn.

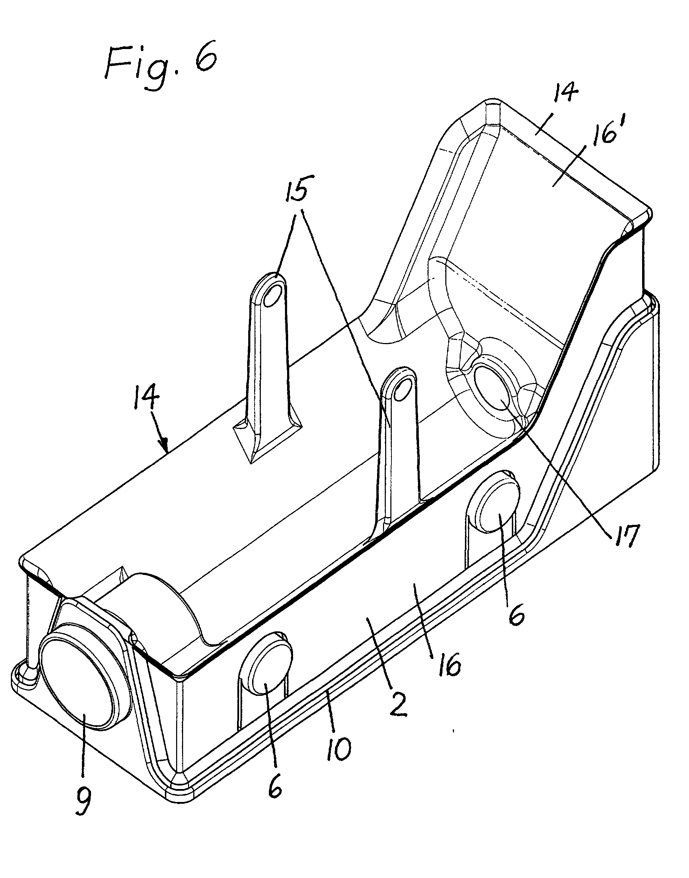

Das Kunststoffbodenteil 2 ist insbesondere in Figur 6 dargestellt und besitzt zur Anpassung an den Querschnitt des Blechmantels 1 eine rundum laufende Seitenwandung 16 und eine etwas höher stehende Seitenwandung 16', wobei der obere Rand der Seitenwandung 16,16' als umlaufende Dichtlippe 14 ausgebildet ist. Diese Dichtlippe 14 wird vorteilhaft durch die Ausbildung dieses Kunststoffteiles 2 als Zwei-Komponenten-Verbindung erzielt. Danach besteht die Dichtlippe 14 aus einem weichen, elastischen Kunststoff und die übrigen Gehäuseteile aus einem starren Kunststoff. Dieses Bodenteil 2 dient zur Aufnahme der funktionellen Komponenten, wie einer Dosierschnecke 12 und eines Räumrades 13, wobei die Dosierschnecke 12 im Bereich eines Produktauslaufes 9 an der einen Seite des Bodenteiles und einem Lager 17 antriebsseitig gelagert ist. Das Zahnrad 13 ist an seitlich hochstehenden Lagerböcken gehaltert und wird über die Dosierschnecke 12 angetrieben. Seitlich am Gehäuse befinden sich die Rastelemente 6. Weiterhin weist das Bodenteil 2 eine rundum laufende Kantenfassung 10 auf, in die der Rand des Blechmantels 2 eingreift.

Die transparente Profilleiste 3 ist in Figur 6 dargestellt. Sie ist mit in Längsrichtung verlaufenden Längsrillen 18 versehen, die die hakenförmig geformten Kanten 8 des Blechmantels 1 aufnehmen. Diese Profilleiste 3 hat einmal die Aufgabe, die Längskanten 7 formschlüssig und dicht zu verbinden und weiterhin den Füllzustand des Behälters anzuzeigen.

Der Produktbehälter nach der Erfindung läßt sich einfach aus seinen Einzelteilen zusammensetzen und auch wieder demontieren. Hierzu wird der Blechmantel 1 auf das Bodenteil 2 aufgesetzt und über den Schnappverschluß 6 arretiert.

Anstelle des in den Zeichnungen dargestellten Schnappverschlusses können die Schnappverbindungen zur Befestigung des Behältermantels 1 an dem Bodenteil 2 separate Teile sein, die an dem Bodenteil 2 befestigt sind. Die Schnapper können auch zur Befestigung in dem Bodenteil 2 eingeklippt sein.

Schließlich wird dann von oben her die transparente Profilleiste 3 am Schlitz 11 des Blechmantels 1 eingeschoben, so daß ein insgesamt dichter Behälter entsteht.

### Bezugszeichenaufstellung

- 1: Blechmantel
- 2: Bodenteil - Kunststoff
- 3: Profilleiste - Kunststoff
- 4: obere Öffnung
- 5: untere Öffnung
- 6: Schnappverschluß - Rastelemente
- 7: Längskante
- 8: hakenförmig geformte Kanten
- 9: Produktauslauf
- 10: Kantenfassung
- 11: Schlitz
- 12: Dosierschnecke
- 13: Zahnrad - Räumrad
- 14: Dichtlippe
- 15: Lagerbock
- 16: Seitenwandung
- 16': hochstehende Seitenwandung
- 17: Lager antriebsseitig
- 18: Längsrillen
- 19: Öffnungen
- 20: Separates Rastelement
- 21: Rastnase
- 22: Öffnung
- 23: Zunge

## Patentansprüche

1. Produktbehälter für Getränkeautomaten mit einem Blechbehältnis, in dessen Boden Funktionselemente, nämlich eine Dosierschnecke und Einrichtungen zur Produktlockerung angeordnet sind, **dadurch gekennzeichnet, daß** ein hochstehender prismatischer Blechmantel (1) mit mehreckigem, ovalem oder kreisförmigem Querschnitt vorgesehen ist, der einen über die ganze Höhe verlaufenden Schlitz (11) aufweist, daß in den Schlitz (11) eine Profilleiste (3) formschlüssig und abdichtend eingesetzt ist und daß in die untere Öffnung (5) des Blechmantels (1) ein Kunststoffbodenteil (2) mit den Funktionselementen (12, 13) formschlüssig und dicht eingesteckt ist.

2. Produktbehälter nach Anspruch 1, **dadurch gekennzeichnet, daß** das Bodenteil (2) in den Blechmantel (1) mittels eines Schnappverschlusses (6) eingerastet ist.

3. Produktbehälter nach Anspruch 1 und 2, **dadurch gekennzeichnet, daß** die Abdichtung zwischen Bodenteil (2) und Blechmantel (1) durch eine im 2Komponenten-Verfahren am Bodenteil (2) angegossene Dichtlippe (14) erreichbar ist.

4. Produktbehälter nach Anspruch 1 bis 3, **dadurch gekennzeichnet, daß** die Profilleiste (3) über dem Produktauslauf (9) angeordnet und transparent ist.

5. Produktbehälter nach einem der Ansprüche 1 bis 4, **dadurch gekennzeichnet, daß** der Blechmantel (1) aus Edelstahl besteht.

6. Produktbehälter nach einem der Ansprüche 1 bis 5, **dadurch gekennzeichnet, daß** zum formschlüssigen Verbinden des Blechmantels (1) und des Bodenteils (2) an dem Bodenteil (2) Rastelemente (6) angeordnet sind, die in den Blechmantel (1) eingreifen.

7. Produktbehälter nach einem der Ansprüche 1 bis 6, **dadurch gekennzeichnet, daß** an dem Bodenteil (2) separate Rastelemente (20) angeordnet sind, die in den Blechmantel (1) einschnappen.

8. Produktbehälter nach Anspruch 7, **dadurch gekennzeichnet, daß** die Rastelemente in dem Bodenteil (2) eingeklippt sind.

## Claims

1. Product container for drinks machines, comprising a sheet metal receptacle, in the base of which function elements, i.e. a metering screw and devices for product loosening, are arranged, **characterised in that** an upright, prismatic sheet metal case (1) with a polygonal, oval or circular cross-section is provided, which comprises a slit (11) extending over the entire height, **in that** a profiled strip (3) is inserted into the slit (11) in an interlocking and sealing manner, and **in that** a plastics material base component (2) is placed into the lower opening (5) of the sheet metal case (1), in an interlocking and tight manner with the function elements (12, 13).

2. Product container according to claim 1, **characterised in that** the base component (2) is locked into the sheet metal case (1) by means of a spring catch (6).

3. Product container according to claims 1 and 2, **characterised in that** the seal between the base component (2) and the sheet metal case (1) can be obtained by means of a sealing lip (14) cast on the base component (2) using the two component method.

4. Product container according to claims 1 to 3, **characterised in that** the profiled strip (3) is arranged above the product outlet (9) and is transparent.

5. Product container according to any of claims 1 to 4, **characterised in that** the sheet metal case (1) is made of stainless steel.

6. Product container according to any of claims 1 to 5, **characterised in that** locking elements (6), which engage with the sheet metal case (1), are arranged on the base component (2), in order to connect the sheet metal case (1) and the base component (2) in an interlocking manner.

7. Product container according to any of claims 1 to 6, **characterised in that** separate locking elements (20), which snap onto the sheet metal case (1), are arranged on the base component (2).

8. Product container according to claim 7, **characterised in that** the locking elements are clipped onto the base component (2).

## Revendications

1. Conteneur de produit pour des automates de boisson présentant un récipient en tôle dans le fond duquel sont disposés des éléments fonctionnels, à savoir une vis de dosage et des équipements pour brasser le produit, **caractérisé en ce qu'**une enveloppe de tôle (1) prismatique élevée en hauteur ayant une section polygonale, ovale ou circulaire est prévue, qui présente une fente (11) s'étendant sur toute la hauteur, qu'une baguette profilée (3) est insérée par conjugaison de formes et de manière étanche dans la fente (11) et qu'une pièce de fond (2) en matière plastique comportant les éléments fonctionnels (12, 13) est insérée par conjugaison de formes et de manière étanche dans l'ouverture inférieure (5) de l'enveloppe de tôle (1).

2. Conteneur de produit selon la revendication 1, **caractérisé en ce que** la pièce de fond (2) est encliquetée au moyen d'une fermeture par encliquetage (6) dans l'enveloppe de tôle (1).

3. Conteneur de produit selon la revendication 1 et 2, **caractérisé en ce que** l'étanchéité entre la pièce de fond (2) et l'enveloppe de tôle (1) peut être obtenue par une lèvre d'étanchéité (14) moulée sur la pièce de fond (2) par un procédé à 2 composants.

4. Conteneur de produit selon la revendication 1 à 3, **caractérisé en ce que** la baguette profilée (3) est disposée au-dessus de la sortie (9) du produit et est transparente.

5. Conteneur de produit selon l'une des revendications 1 à 4, **caractérisé en ce que** l'enveloppe de tôle (1) est constituée d'acier spécial.

6. Conteneur de produit selon l'une des revendications 1 à 5, **caractérisé en ce que**, pour la liaison par conjugaison de formes de l'enveloppe de tôle (1) et de la pièce de fond (2), des éléments d'encliquetage qui viennent en prise dans l'enveloppe de tôle (1) sont disposés sur la pièce de fond (2).

7. Conteneur de produit selon l'une des revendications 1 à 6, **caractérisé en ce que** des éléments d'encliquetage (20) séparés qui s'encliquètent dans l'enveloppe de tôle (1) sont disposés sur la pièce de fond (2).

8. Conteneur de produit selon la revendication 7, **caractérisé en ce que** les éléments d'encliquetage sont agrafés dans la pièce de fond (2).
